# EUROPÄISCHE PATENTSCHRIFT

(11) **EP 2 219 093 B1**
(45) Veröffentlichungstag und Bekanntmachung des Hinweises auf die Patenterteilung: **31.07.2013**
(21) Anmeldenummer: 09014443.7
(22) Anmeldetag: 19.11.2009
(51) Int. Cl.: G05D 23/19

(54) **Verfahren zur Regelung der Raumtemperatur**
Method for regulating room temperature
Procédé de réglage de la température ambiante

(30) Priorität: 17.02.2009 DE 102009009197
(43) Veröffentlichungstag der Anmeldung: 18.08.2010
(73) Patentinhaber: ista International GmbH, 45131 Essen (DE)
(72) Erfinder: Mügge, Günter, Dr.-Ing., 48159 Münster (DE)
(74) Vertreter: Cohausz Hannig Borkowski Wißgott

(56) Entgegenhaltungen:
- EP-A1- 0 434 170
- EP-A2- 2 014 994
- DE-A1- 3 138 701
- GB-A- 2 449 498
- NL-C2- 1 033 310
- US-A1- 2003 160 103
- US-A1- 2006 196 953

## Beschreibung

Die Erfindung betrifft ein Verfahren zur Regelung der Raumtemperatur in wenigstens einem Raum, bei welchem mittels eines Raumtemperaturreglers, insbesondere mittels eines Thermostatventils, in Abhängigkeit von einer Abweichung der tatsächlichen Raumtemperatur (Raum-Ist-Temperatur) von einem Temperatursollwert, der Massenstrom eines Heizmediums durch einen Heizkörper des betreffenden Raums geregelt wird, wobei ein Temperatursollwert in Abhängigkeit von wenigstens einem, insbesondere in einem Raumtemperaturregler gespeicherten Temperatur-Zeit-Profil vorgegeben wird und der Raumtemperaturregler selbsttätig den durch das Temperatur-Zeit-Profil vorgegebenen Temperatur-Sollwert mit der Zeit fortschreitend verringert, wenn keine durch eine Messgröße repräsentierte Wärmeanforderung gegeben ist.

Derartige Verfahren sind im Stand der Technik bekannt und werden eingesetzt, um die Raumtemperatur in einem Raum an die individuellen Bedürfnisse von Personen anzupassen. Üblicherweise ist es dabei bekannt, die Ist-Temperatur des Raums zu erfassen und mit einem Temperatursollwert zu vergleichen und anhand des Ergebnisses des Vergleichs bei einem Raumtemperaturregler ein Stellelement zu ändern, um durch Änderung des Massenstromes des Heizmedium die Regelabweichung zu minimieren. Beispielsweise kann dies durch Thermostatventile erfolgen.

Das Dokument NL 1033310 bzw. die inhaltsgleiche EP 2 081 097 A1 beschreibt ein solches Verfahren mit fortschreitender Verringerung des Heizenergieverbrauchs bei Abwesenheit von Personen.

Es ist dabei weiterhin bekannt, dass Temperatur-Zeitprofile vorgegeben werden können, d.h. Raumtemperatursollwerte in Abhängigkeit von der Zeit, insbesondere der Tageszeit, oder Raumtemperaturänderungen zu einer Zeit, um so beispielsweise zu vermeiden, dass die Raumtemperatur während der gesamten Zeit eines Tages auf einem bestimmten, z.B. als angenehm empfundenen Niveau gehalten wird, obwohl beispielsweise über einen langen Zeitraum hinweg keine Person in dem Raum ist, beispielsweise aufgrund Abwesenheit während der üblichen Arbeitszeiten.

Im Stand der Technik sind dafür beispielsweise elektronische Thermostatventile bekannt, denen nutzerseitig ein solches Solltemperatur-Zeit-Profil vorgegeben, d.h. insbesondere darin eingespeichert werden kann. Die Speicherung der Temperatur-Zeit-Profile kann dabei oftmals für jeden Tag einer Woche individuell erfolgen und es können üblicherweise wenigstens zwei Raumtemperatursollwerte, insbesondere ein abgesenkter niedriger und ein demgegenüber höherer Raumtemperatursollwert vorgegeben werden. Ein Nutzer kann so durch Programmierung selbst bestimmen, zu welchen Tageszeiten ein Raum welche Temperatur bevorzugt erreichen soll und wird dabei bevorzugt solche Zeiten wählen, wenn er grundsätzlich zu Hause und nicht auf der Arbeit ist.

Ein Temperatur-Zeit-Profil umfasst gemäß dem Verständnis der Erfindung jegliche Information von gewünschten Temperatur-Sollwerten in Abhängigkeit von einer Zeit, z.B. Tages-Uhrzeit und/oder Tag und/oder Woche und/oder Monat etc. Ein solches Profil kann z.B. als Wertetabelle oder auch als ein funktionaler Zusammenhang gegeben und gespeichert sein, bevorzugt direkt im Raumtemperaturregler. Dabei kann es vorgesehen sein, dass in Abweichung vom zuvor genannten Beispiel nicht nur zwei, sondern grundsätzlich eine beliebige Anzahl von Soll-Temperaturwerten in Abhängigkeit von der Zeit gespeichert bzw. vorgegeben sein können. Beispielsweise können für mehrere Zeiten, z.B. Zeiten eines Tages mit einer bestimmten zeitlichen Auflösung gewünschte Raumtemperatur-Sollwerte gespeichert sein. Es kann auch vorgesehen sein, lediglich zu speichern, zu welchen Zeiten eine Änderung eines Raumtemperatur-Sollwertes erfolgen soll und auf welchen Raumtemperartursollwert oder um welchen Betrag und mit welchem Vorzeichen eine solche Änderung vorgenommen werden soll.

Obwohl sich bereits durch die Vorgabe von Temperatur-Zeit-Profilen gegenüber Raumtemperaturreglern ohne solche Profile Energie einsparen lässt, ergibt sich selbst bei solchen zeitgesteuerten Raumtemperaturreglern oftmals noch eine Verschwendung von Heizenergie, da sich eine Person, die z.B. in einer Wohnung lebt oder sich auch in anderen Gebäuden aufhält, nur in einem von mehreren Räumen befinden kann, so dass ein Verschwendungspotential bezüglich der übrigen Räume gegeben ist. Oftmals ist auch weiterhin die Tendenz festzustellen, dass Personen in Unkenntnis ihrer eigenen Empfindung für eine behagliche Raumtemperatur die Sollwerte, die der Raumtemperaturreglung in einem solchen Profil zugrunde liegen sollen, zu hoch wählen. So wird Energie verschwendet, weil eine Person selbst geringere Temperaturen noch als angenehm empfinden würde.

Es ist daher die Aufgabe der Erfindung, ein Verfahren zur Regelung der Raumtemperatur in wenigstens einem Raum bereit zu stellen, bei welchem unter Einsatz von Raumtemperaturreglern mit vorgegebenen Temperatur-Zeit-Profilen weitere Energieeinsparungen ermöglicht werden.

Erfindungsgemäß wird diese Aufgabe dadurch gelöst, dass der Raumtemperaturregler eine der Verringerung gegenläufige Erhöhung des Temperatur-Sollwerts vornimmt in Abhängigkeit von einer eine Wärmeanforderung repräsentierenden Messgröße, die erfasst wird mittels eines von einem Nutzer betätigbaren Stellelements, wobei das Temperatur-Zeitprofil, insbesondere durch einen Raumtemperaturregler selbsttätig geändert wird in Abhängigkeit von wenigstens einer gemessenen Raum-Isttemperatur zum Zeitpunkt der wenigstens einen Wärmeanforderung und gespeichert wird.

Der wesentliche Kerngedanke des erfindungsgemäßen Verfahrens liegt darin, dass ein weiteres Einsparpotential bezüglich Wärmeenergie dadurch erschlossen wird, dass eine Soll-Temperaturvorgabe, die von einem Nutzer stammt, nicht als starre, für alle Zeit feste Vorgabe gewertet wird, sondern dass eine automatische Verringerung der Soll-Temperaturvorgabe, insbesondere Verringerung über die Zeit hinweg, vorgenommen wird, was gemäß der Erfindung bevorzugt durch den Raumtemperaturregler selbst erfolgen kann.

Dem Erfindungsgedanken liegt weiterhin zugrunde, dass oftmals sich Personen nicht während der gesamten Zeit bzw. dem gesamten Zeitintervall eines Soll-Temperatur-Zeit-Profils, in welchem ein z.B. hohes Temperaturniveau als Temperatursollwert gewählt ist, in einem betreffenden Raum aufhalten und somit nicht zwangsläufig die Notwendigkeit besteht, dieses Temperaturniveau für diese gesamte Zeit aufrecht zu erhalten. Durch die automatische selbsttätige Absenkung der Raumtemperatursollwerte wird somit die in dem Raum vorherrschende Raumtemperatur über die Zeit schleichend verringert, so dass hierdurch Energie eingespart wird.

Dabei kann es in einer Ausführungsform vorgesehen sein, dass die selbsttätige Verringerung in Abhängigkeit von einer eine Wärmeanforderung repräsentierenden Messgröße erfolgt.

Beispielsweise kann es hierbei vorgesehen sein, dass eine Verringerung des tatsächlichen zur Regelung verwendeten Raumtemperatur-Sollwertes gegenüber dem aus dem Temperatur-Zeit-Profil sich ergebenden oder in dem Temperatur-Zeit-Profil gespeicherten Sollwert nur dann erfolgt, wenn keine aktuelle Wärmeanforderung für den Raum gegeben ist.

Wird z.B. eine Messgröße erfasst, welche aktuell für einen Raum repräsentiert, dass eine Wärmeanforderung gegeben ist, so kann es vorgesehen sein, dass keine Verringerung der Raumtemperatursollwerte erfolgt, also der Soll-Temperaturwert aus dem Temperatur-Zeit-Profil zu der gegebenen Zeit ungeändert für die Raumtemperaturregelung verwendet wird.

Es kann hingegen eine automatische, insbesondere mit der Zeit fortschreitende Verringerung der Soll-Temperatur durchgeführt werden, wenn die Messgröße zeigt, dass aktuell keine Wärmeanforderung gegeben ist.

Beispielsweise kann eine Wärmeanforderung bei dieser und auch später beschriebenen Ausführungen gegeben sein durch die Anwesenheit einer Person in einem Raum, was messtechnisch, beispielsweise mit Bewegungsdetektoren oder ähnlichem, erfasst werden kann. Ist demnach in diesem Beispiel eine Person im Raum anwesend, so ergibt die messtechnische Erfassung einen Wert einer Messgröße, welcher eine Wärmeanforderung als aktuell vorliegend repräsentiert, so dass keine Verringerung des sich aus dem Profil ergebenden Sollwertes erfolgt, wohingegen die automatische Verringerung durchgeführt wird, wenn die messtechnische Erfassung der besagten Messgröße ergibt, dass keine Person anwesend ist.

In einer ebenso möglichen Ausführungsform kann es vorgesehen sein, dass ein Raumtemperaturregler selbsttätig die durch ein Temperatur-Zeit-Profil vorgegebenenTemperatur-Sollwerte, insbesondere in einem Temperatur-Zeit-Profil gespeicherten Temperatursollwerte, insbesondere mit der Zeit fortschreitend verringert und in Abhängigkeit von der eine Wärmeanforderung repräsentierenden Messgröße erhöht.

Bei dieser Ausführungsform erfolgt demnach immer eine Verringerung der sich aus einem Temperatur-Zeit-Profil ergebenden Temperatursollwerte und es erfolgt eine der Verringerung gegenläufige Korrektur nach oben, d.h. eine Erhöhung, wenn durch Erfassung der eingangs genannten Messgröße festgestellt wird, dass eine Wärmeanforderung aktuell vorliegt.

Die eine Wärmeanforderung repräsentierende Messgröße kann bei dieser Ausführung, ebenso wie bei der zuvor benannten Ausführung, erfasst werden z.B. mittels eines von einem Nutzer betätigbaren Stellelementes, d.h. es kann hier verfahrensgemäß vorgesehen sein, dass das Vorliegen einer Wärmeanforderung eine Aktion eines Nutzers voraussetzt, die z.B. durch ein System (z.B. den Raumtemperaturregler) bei der Durchführung des Verfahren abgefragt wird. Eine solche Aktion kann verfahrensgemäß z.B. erfasst werden durch Messen der genannten Messgröße.

Wird beispielsweise ein Stellelement oder sonstiges Betätigungselement betätigt, wie in einer einfachen Ausführung beispielsweise durch das Drehen eines Stellknopfes, wie es ein Nutzer beispielsweise von üblichen Thermostatventilen kennt oder durch Drücken von wenigstens einer Taste, so kann diese Betätigung sich in der messtechnisch erfassten Messgröße wiederspiegeln und verfahrensgemäß ausgewertet werden in dem Sinne, dass erkannt wird, dass eine Wärmeanforderung durch einen Benutzer gegeben ist, so dass eine Verringerung vor vorne herein unterbleibt oder eine weitere Verringerung des Temperatursollwertes unterbleibt oder sogar rückgängig gemacht wird.

Z.B. kann eine Messgröße wenigstens einen ersten Wert annehmen der repräsentiert, dass keine Wärmeanforderung gegeben ist und wenigstens einen zweiten Wert, der repräsentiert, dass eine Wärmeanforderung gegeben ist. Ein solcher Wert kann z.B. auch in seinem absoluten Betrag die Größe der Wärmeanforderung repräsentieren.

In einer möglichen Ausführung kann es beispielsweise vorgesehen sein, dass eine solche Messgröße repräsentiert wird durch die Dauer, die Weite, die Häufigkeit oder die Richtung der Betätigung eines eingangs genannten Betätigungs- oder Stellelementes oder durch einen mit dem Stellelement eingestellten, insbesondere elektronisch erfassbaren Wert. Beispielsweise kann es sich um einen Widerstandswert handeln, wie er z.B. durch einen Potentiometer bereitgestellt wird, welches durch Drehung oder auch Betätigen eines Schiebereglers seinen Widerstandswert ändert. Ebenso können Zustandsänderungen erfasst werden, beispielsweise wenn ein Nutzer lediglich einen Taster betätigt, der z.B. kontinuierlich verfahrensgemäß abgefragt wird, um eine Wärmeanforderung zu erfassen. Liegt demnach eine solche Wärmeanforderung vor, so wird wie eingangs genannt überhaupt von einer Verringerung abgesehen oder ausgehend von einer bereits erfolgten Verringerung von der weiteren Verringerung abgesehen oder die Verringerung rückgängig gemacht bzw. zumindest der bislang verringerte Temperatursollwert erhöht.

Wie im eingangs erwähnten Beispiel genannt, kann es auch vorgesehen sein, dass die eine Wärmeanforderung repräsentierende Größe erfasst wird durch die Detektion der Anwesenheit einer Person in einem Raum, was beispielsweise durch übliche Bewegungsmelder erfasst werden kann. Derartige Bewegungsmelder stellen ein entsprechendes Steuersignal zur Verfügung, wenn eine Bewegung bzw. die Anwesenheit einer Person festgestellt wird. Dieses Steuersignal kann ebenso die eingangs genannte Messgröße darstellen.

In wiederum anderer Ausführung kann es auch vorgesehen sein, als genannte Messgröße wenigstens eine physiologische Messgröße einer Person zu detektieren bzw. sensieren, wie beispielsweise die Körpertemperatur einer Person, Pulsfrequenz oder ähnliches. Dies kann im Rahmen des Verfahren z.B. auch berührungslos erfolgen, z.B. durch Detektoren und/oder Sensoren in einem Raum.

In einer ebenso möglichen Ausführungsform kann es vorgesehen sein, die Detektion der Anwesenheit mindestens einer Person in einem anderen Raum als demjenigen, der aktuell in der Regelung betrachtet wird, zu erfassen. Dieser Überlegung liegt zugrunde, dass bekannterweise eine Person gewohnheitsmäßig bestimmte Wege in einer Wohnung zurücklegt, beispielsweise bei der Rückkehr von der Arbeit, so dass in einem Beispiel bereits eine Wärmeanforderung für ein Wohnzimmer gegeben wird, wenn die Anwesenheit einer Person im Flurbereich der Wohnung oder in einem Badezimmer festgestellt wird.

Ebenso kann es in einer Ausführungsform vorgesehen sein, dass Fernwirksignale als Messgröße dienen oder zumindest eine solche beeinflussen. Beispielsweise kann eine Person von außen durch Telekommunikation, z.B. durch SMS-Nachrichten oder über das Internet, eine Wärmeanforderung bekannt geben. Es kann demnach vorgesehen sein, dass verfahrensmäßig durch den Raumtemperaturregler oder ein übergeordnetes System, mit welchem der Raumtemperaturregler kommuniziert, kontinuierlich abgefragt wird, ob eine Wärmeanforderung durch ein Fernwirksignal vorliegt, beispielsweise durch eine Kommunikation an dieses System bzw. dem Raumtemperaturregler bekannt gegeben wird.

In einer bevorzugten Ausführungsform der Erfindung kann es vorgesehen sein, dass eine Sollwertanpassung, hier aufgrund der automatisierten, selbsttätigen Verringerung der Temperatursollwerte gegenüber denjenigen in dem gespeicherten Temperatur-Zeit-Profil, nur bis zu einer minimalen unteren Grenztemperatur erfolgt. So wird sichergestellt, dass nicht versehentlich durch die automatische Verringerung unzulässige Grenztemperaturen, wie z.B. das Unterschreiten einer Frostgrenze, erfolgen kann, wenn eine Person dauerhaft abwesend ist oder keinerlei Wärmeanforderung bekannt gegeben wird.

Auch kann durch die Vorgabe eines minimalen Grenzwertes verhindert werden, dass ein Raum zu stark auskühlt, also dass eine benötigte Zeit zur genügenden Wiederaufheizung zu lang wäre und demnach als unkomfortabel empfunden würde.

Es kann ebenso vorgesehen sein, insbesondere um die zuvor genannten Effekte zu vermeiden, bei einem Temperatur-Zeit-Profil mit wenigstens einem niedrigen und wenigstens einem hohen Soll-Temperatur-Wert nur die gespeicherten hohen Sollwerttemperaturen zu verringern. So wird sichergestellt, dass die in dem Profil gespeicherten niedrigen Soll-Temperaturwerte in einer ersten möglichen Ausführung unbeeinflusst bleiben und somit demnach für alle möglichen Sollwertvorgaben immer eine untere Grenze darstellen, die nicht nach unten hin durchschritten wird. So werden demnach auch durch diesen Verfahrensaspekt Mindesttemperaturen in den Räumen eingehalten.

In einer anderen Ausführung kann es auch vorgesehen sein, dass nur die oberhalb einer festgelegten Untergrenze liegenden Sollwert-Temperaturen wie zuvor beschrieben verringert werden, dass jedoch weiterhin die Möglichkeit besteht, eine durch ein Temperatur-Zeitprofil festgelegte Untergrenze automatisch zu erhöhen.

Gibt z.B. das Temperatur-Zeitprofil zu einer bestimmten Zeit eine Absenkung des Temperatur-Sollwertes vor, so kann es vorgesehen sein, dass ein Raumtemperaturregler diesen Sollwert zunächst zur Regelung übernimmt, dann jedoch erhöht, wenn eine Wärmeanforderung durch eine Person - wie zuvor beschrieben - festgestellt wird.

Es kann auch vorgesehen sein, dass der Zeitpunkt der durch das Profil vorgegebenen Absenkung auf einen späteren Zeitpunkt automatisch verschoben wird, wenn eine Wärmeanforderung in einer bestimmten zeitlichen Umgebung vor oder um dem Absenkzeitpunkt festgestellt wird, der sich aus dem Profil ergibt oder es wird die Absenkung ignoriert und mit einer Absenkung erst fortgefahren, wenn sich aus dem Profil eine nächste Änderung, insbesondere Absenkung ergibt. Ein durch ein Profil gegebener Absenkungszeitpunkt kann auch auf einen früheren Zeitpunkt verschoben werden, z.B. wenn keine Wärmeanforderung durch einen Nutzer, insbesondere in einer festgelegten zeitlichen Umgebung vor oder um diesen Zeitpunkt herum festgestellt wird.

In gleicher Weise kann es auch vorgesehen sein, Aufheizzeitpunkte, d.h. Änderungen im Profil von einem niedrigeren zu einem höheren RaumtemperaturSollwert zu einer bestimmten im Profil festgelegten Zeit auf eine spätere Zeit automatisch zu verschieben, z.B. wenn in einer festgelegten zeitlichen Umgebung vor oder um diesen Aufheizzeitpunkt keine Wärmeanforderung festgestellt wird. Aufheizzeitpunkte können auch auf einen früheren Zeitpunkt verschoben werden wenn eine Wärmeanforderung in einer festgelegten zeitlichen Umgebung vor oder um den durch das Profil gegebenen Aufheizzeitpunkt festgestellt wird.

Allgemein ist es also wesentlich für das Verfahren, dass neben einer Verringerung der Sollwerttemperaturen auch die Zeitpunkte von Sollwerttemperatur-Änderungen, die durch das Profil vorgegeben werden in Abhängigkeit von Wärmeanforderungen bzw. einer diese repräsentierenden Messgröße geändert werden können, insbesondere in Abhängigkeit von der Detektion oder Nicht-Detektion einer Wärmeanforderung in einer festgelegten zeitlichen Umgebung vor oder um den durch das Profil gegebenen Änderungs-Zeitpunkt.

Die zuvor genannten zeitlichen Verschiebungen können dabei sowohl für ein aktuell gültiges Profil berücksichtigt werden oder auch für später in einer folgenden Periode, z.B. am folgenden Tag zu benutzende Profile.

Verfahrensgemäß kann es vorgesehen sein, dass die automatisierte selbsttätige Sollwertanpassung, d.h. zum einen eine automatische Verringerung gegenüber den gespeicherten Sollwerttemperaturen im Temperatur-Zeit-Profil sowie auch die gegebenenfalls stattfindenden Erhöhungen und/oder zeitlichen Verschiebungen der Änderungen aufgrund der Feststellung von Wärmeanforderungen periodisch erfolgt, insbesondere täglich, wobei jeweils von einem gespeicherten, insbesondere ursprünglichen gespeicherten Temperatur-Zeit-Profil ausgegangen wird.

So kann in einer Ausführungsform jeweils täglich beginnend immer dasselbe gespeicherte Temperatur-Zeit-Profil als Ausgangssituation vorgesehen sein, es kann jedoch auch in einer anderen Ausführungsform vorgesehen sein, dass das Verfahren selbstlernend ausgestattet ist und das gespeicherte Temperatur-Zeit-Profil anpasst und speichert, insbesondere mit jeder periodischen Ausführung bzw. vor jeder periodischen Ausführung des erfindungsgemäßen Verfahrens eine Anpassung vornimmt.

Erfindungsgemäss wird ein ursprüngliches gespeichertes Temperatur-Zeit-Profil vorgegeben, wobei sich im Laufe der Durchführung des erfindungsgemäßen

Verfahrens ergibt, dass eine Person erst bei Unterschreiten eines bestimmten Temperatursollwertes oder auch einer konkreten gemessenen Istraumtemperatur eine Wärmeanforderung gibt, die verfahrensgemäß festgestellt wird, so dass ausgehend von diesen Informationen ein neues im Temperatur-Sollwert und/oder in der Zeit einer Temperatursollwertänderung geändertes Temperatur-Zeit-Profil erstellt und gespeichert wird, welches für die nächste Durchführung des Verfahren zugrunde gelegt wird.

In einer Möglichkeit, das erfindungsgemäße Verfahren durchzuführen, kann es vorgesehen sein, dass zur Berechnung eines aktuell zu einer gegebenen Zeit, z.B. Tageszeit zu verwendenden Temperatursollwertes mit Hilfe des Temperatur-Zeitprofils ein zur gegebenen Zeit gültiger Temperatursollwert bestimmt oder in einfacher Ausführung aus dem Temperatur-Zeit-Profil der zu dieser Zeit gespeicherte Temperatursollwert ausgelesen und von diesem Wert ein Differenzwert, insbesondere ein gespeicherter Differenzwert, subtrahiert wird.

Dabei kann es in einer Weiterbildung vorgesehen sein, dass sich dieser zu subtrahierende Differenzwert mit einer z.B. gespeicherten und ggfs. auch änderbaren Geschwindigkeit erhöht und/oder von der eingangs genannten Messgröße, welche eine Wärmeanforderung repräsentiert, abhängig ist.

So kann es demnach vorgesehen sein, dass mit einer gewissen Geschwindigkeit der Differenzwert erhöht wird, so dass im Laufe der Zeit aufgrund es immer größer werdenden Differenzwertes der für die Raumtemperaturregelung zu verwendende Temperatursollwert gegenüber Sollwert, wie er sich aus dem Profil ergibt, immer mehr abnimmt. Hierdurch erfolgt im Laufe der Zeit eine immer größere Energieeinsparung, bis dass eine Wärmeanforderung mittels Messen der genannten Messgröße festgestellt wird, z.B. wenn eine Person eine solche Anforderung aktiv gibt.

Es kann auch sein, dass der Differenzwert selbst von der Messgröße abhängig ist, also beispielsweise sich der Differenzwert zu Null ändert, wenn die Messgröße eine Wärmeanforderung zeigt, so dass in einem solchen Fall der tatsächlich im Profil gespeicherte Temperatursollwert für das weitere Verfahren der Temperaturregelung herangezogen wird.

Neben der Änderung des Differenzwertes von dem bisherigen aktuellen Wert auf den Wert Null beim Feststellen einer Wärmeanforderung kann es selbstverständlich auch vorgesehen sein, den zu einem Zeitpunkt bestehenden Differenzwert lediglich zu ändern, insbesondere ohne diesen auf Null zurückzusetzen, beispielsweise zu verringern. So wird hierdurch erreicht, dass durch das Feststellen einer Wärmeanforderung der sich durch die kontinuierliche Verringerung ergebende aktuell zu verwendende Temperatursollwert nicht weiter verringert, sondern erhöht wird, wobei eine solche Erhöhung jeden Wert annehmen kann, zwischen dem durch die Verringerung zuvor erreichten Temperatur-Sollwert bis zum im Profil gespeicherten Temperatursollwert.

Ebenso kann es vorgesehen sein, dass bei einer Feststellung einer Wärmeanforderung die Geschwindigkeit geändert wird, mit welcher der Temperatur-Sollwert zukünftig weiter fällt, bzw. sich der Differenzwert, der von dem gespeicherten Temperatursollwert des Profils zu subtrahieren ist, erhöht. Die Änderung der Geschwindigkeit kann dabei insbesondere gleichzeitig erfolgen mit einer Änderung des absoluten Wertes des Differenzwertes, so dass bei einer Wärmeanforderung nicht nur der aktuell vorliegende Temperatursollwert erhöht wird, sondern auch für die Zukunft die weitere Geschwindigkeit der Verringerung geändert, z.B. geringer eingestellt wird. Es kann so sukzessive eine Anpassung der gesamten Regelung erfolgen, die zu einer Raumtemperatur führt, welche ein Nutzer als angenehm und behaglich empfindet.

Es kann dabei in einer Ausführung weiterhin vorgesehen sein, dass bei einer festgestellten Temperatursollwertänderung in einem gespeicherten Temperatur-Zeit-Profil zu einer bestimmten Zeit der gespeicherte Differenzwert, der bislang zur Durchführung des Verfahrens der automatischen Verringerung des Temperatursollwertes benutzt wurde, geändert wird, insbesondere zu Null zurückgesetzt wird. Mit jedem Temperatursprung innerhalb eines Temperatur-Zeit-Profils wird demnach das erfindungsgemäße Verfahren von neuem, ausgehend von der im Profil gespeicherten Sollwerttemperatur, begonnen.

Alternativ kann es auch vorgesehen sein, dass ein Temperatur-Zeit-Profil gespeichert ist, z.B. im Raumtemperaturregler und beispielsweise gemäß einer Nutzervorgabe und von diesem Profil ausgehend ein konkret bei der Regelung zu benutzendes Profil erstellt wird z.B. automatisch durch den Raumtemperaturregler, wobei in diesem zu benutzenden Profil eine automatische Verringerung schon von vorne herein, insbesondere für alle möglichen Zeiten, die ein Profil umfasst, gespeichert ist. Es kann sodann vorgesehen sein, bei festgestellten Wärmeanforderungen das zu benutzende Profil zu ändern und das so geänderte Profil weiter zu benutzen. Dabei kann es vorgesehen sein, dass das ursprünglichen Profil beibehalten oder aber überschrieben wird.

Um einer Wärmeanforderung Rechnung zu tragen, die durch einen Nutzer gegeben wird und durch das Ausmessen einer Messgröße festgestellt werden kann, kann es vorgesehen sein, dass in Abhängigkeit von dieser gemessenen Messgröße ein durch das erfindungsgemäße Verfahren verringerter Temperatursollwert, beispielsweise auf den ursprünglichen Temperatursollwert, insbesondere wie er im Profil gespeichert oder durch dieses gegeben ist, zurückgestellt wird und/oder aber dass zur Fortführung des erfindungsgemäßen Verfahrens ein neuer Temperatursollwert festgelegt wird, der zwischen dem ursprünglichen gespeicherten Temperatursollwert und dem bereits durch die Durchführung des Verfahrens verringerten Sollwert liegt und/oder dass die Geschwindigkeit der zukünftigen Verringerung von Temperatursollwerten bzw. der Erhöhung des Differenzwertes geändert wird, insbesondere verringert wird und/oder dass ein gespeicherter Differenzwert geändert, insbesondere verringert wird und/oder dass in einer weiteren ebenso möglichen Ausführungsform ein Temperatursollwert auf einen Wert über dem ursprünglich gespeicherten Temperatursollwert angehoben wird.

Insbesondere die letzte Alternative kann hierbei vorgesehen sein, wenn ein Messwert, welcher die Wärmeanforderung repräsentiert, gegeben ist, welcher darlegt, dass ein Nutzer eine extrem hohe Wärmeanforderung hat. Um einer solchen Wärmeanforderung nachzukommen, kann es demnach vorgesehen sein, zumindest kurzzeitig zur Durchführung der Temperaturregelung im Raum einen Temperatursollwert einzustellen bzw. nach dem erfindungsgemäßen Verfahren vorzugeben, welcher tatsächlich höher liegt als der in dem zugrunde liegenden gespeicherten Temperatur-Zeit-Profil des betreffenden Raumreglers.

Gegebenenfalls kann in diesem Zusammenhang vorgesehen sein, eine hohe Geschwindigkeit der Sollwertverringerung bzw. -erhöhung des zu subtrahierenden Differenzwertes gleichzeitig einzustellen, um zu erreichen, dass der Wunsch nach einer sehr starken Wärmeanforderung nur kurzzeitig bedient wird.

Bei der bereits eingangs genannten periodischen Ausführung des Verfahrens ist es erfindungsgemäss vorgesehen, dass des gespeicherte. Temperatur-Zeit-Profil in Abhängigkeit von wenigstens einer gemessenen Raum-Ist-Temperatur zum Zeitpunkt wenigstens einer Wärmeanforderung geändert wird, wobei nach einer solchen Änderung des Temperatur-Zeit-Profils das Profil gespeichert wird.

Auch kann es vorgesehen sein, dass eine gespeicherte Geschwindigkeit entweder der Sollwerttemperaturverringerung oder der Differenzwerterhöhung selbsttätig geändert wird, insbesondere selbsttätig durch eine Raumtemperaturregelung in Abhängigkeit von der in einem Zeitintervall, beispielsweise einem Tag, vorgenommenen Temperatursollwertänderungen und/oder von der die Wärmeanforderung repräsentierenden Messgröße oder deren zeitlichen Verlauf, wobei nach einer solchen Änderung der Geschwindigkeit die Geschwindigkeit gespeichert wird. Bei der nächsten periodischen Durchführung des erfindungsgemäßen Verfahrens werden diese neu gespeicherten Werte, d.h. das geänderte Temperatur-Zeit-Profil bzw. die Geschwindigkeit der Durchführung des erfindungsgemäßen Verfahrens zugrunde gelegt.

Alternativ kann ein zuvor beschriebenes zu benutzendes Profil, welches sich aus einem vorher gegebenen Profil durch das Verfahren ergibt und somit alle Sollwert- und/oder Zeit-Änderungen und/oder Zeiten der Wärmeanforderungen umfasst zum Zweck einer im Rahmen der Periodizität vorgesehenen späteren Benutzung geändert werden. Z.B. wie zuvor beschrieben können ausgehend von den gespeicherten Werten dieses zu benutzenden Profils neue, z.B. gemittelte Temperaturwerte und/oder neue z.B. verschobene Zeiten der Änderung berechnet und in dem Profil gespeichert werden mit welchen das Verfahren dann in der nächsten Periode gestartet.

Durch die zuvor beschriebenen Möglichkeiten ergibt sich ein Selbstlerneffekt, bei welchem sich das Verfahren auf die Behaglichkeitsempfindungen einer Person automatisch optimiert. Beispielsweise kann es hierbei vorgesehen sein, dass die Temperaturwerte, entweder diejenigen Werte, welche die verringerte Sollwerttemperatur rechentechnisch im Rahmen des Verfahrens erreicht hat oder aber sogar die tatsächliche Istraumtemperatur zum Zeitpunkt einer Wärmeanforderung herangezogen wird.

Es wird so verfahrensgemäß festgestellt, dass diese Temperatur eine untere Grenze darstellt, bei welcher sich eine betreffende Person offensichtlich gerade nicht mehr wohlfühlt, da die Person bei dieser Temperatur eine Wärmeanforderung gibt. Diese Information bzw. die dieser Information zugrunde liegenden Temperaturwerte können demnach ausgewertet werden, um das gespeicherte Temperatur-Zeit-Profil oder die Geschwindigkeit der zukünftigen Verringerung anzupassen.

Beispielsweise kann als neuer oberer Temperaturwert in einem Temperatur-Zeit-Profil ein solcher Wert gewählt werden, welcher zwischen dem bisherigen gespeicherten Temperaturwert und einem der zuvor genannten Temperaturwerte zum Zeitpunkt der Wärmeanforderung liegt. Z.B. im Rahmen einer Intervallhalbierung zwischen dem vom System ursprünglich vorgegebenen gespeicherten oberen Temperaturwert im Profil und dem vom Nutzer festgelegten unteren Temperaturwert kann somit sukzessive eine Optimierung erfolgen.

In einer Weiterbildung des Verfahrens kann es auch vorgesehen sein, dass nicht nur eine Regelung der individuellen Raumtemperaturen vorgenommen wird, sondern ergänzend hierzu auch eine Regelung der Vorlauftemperatur der Heizungsanlage, die vorgesehen ist, um die jeweiligen Räume mit Heizmedium zu bedienen.

Dafür kann es in einer Ausgestaltung vorgesehen sein, dass mehrere Raumtemperaturregler, insbesondere alle Raumtemperaturregler der Räume eines Gebäudes oder den Raumtemperaturreglern zugeordnete Kommunikationsgeräte, in einem Netzwerk, insbesondere einem Funknetzwerk, vernetzt sind und so die Temperatur-Zeit-Profile und/oder Ist-Temperaturen und/oder verfahrensgemäß verringerte Solltemperaturen untereinander und/oder an eine in dem Netzwerk angeordnete Zentralstation übermitteln. Es liegt demnach erfindungsgemäß eine Information über die jeweiligen Temperatur-Zeit-Profile und/oder Ist-Temperaturen und/oder verfahrensgemäß verringerte Solltemperaturen aus allen Räumen vor und kann ausgewertet werden, um anhand dieser Größen eine zur Bedienung des Wärmebedarfs des Gebäudes notwendige Vorlauftemperatur einzustellen oder zu regeln.

Es kann in einer Weiterbildung dabei auch vorgesehen sein, dass die Zentralstation oder ein Raumtemperaturregler die erhaltenen Temperatur-Zeit-Profile miteinander vergleicht und in Abhängigkeit voneinander oder von den weiteren zuvor genannten und ggfs. übermittelten Größen ändert und an die jeweiligen Raumtemperaturregler zurückkommuniziert. Hierdurch kann vermieden werden, dass gegebenenfalls zu gleichen Zeiten ein hoher Wärmebedarf in verschiedenen Räumen gegeben ist, demnach also mehrere Raumtemperaturregler von mehreren Räumen aufgrund einer zeitlichen Vorgabe im Temperatur-Zeit-Profil den Massenstrom der jeweils zugeordneten Heizkörper erhöht und es dadurch zu einer Unterversorgung kommt, da nicht für alle Räume gleichzeitig eine ausreichende Wärmemenge durch die zentrale Heizungsanlage zur Verfügung gestellt werden kann.

Es kann demnach erfindungsgemäß vorgesehen sein, dass durch das beschriebene Verfahren der Änderung und Zurückkommunizierung insbesondere die Zeitpunkte der Anhebung von Solltemperaturen gegeneinander zeitlich verschoben werden, um zu vermeiden, dass in mehreren Räumen gleichzeitig eine Solltemperaturanhebung und damit eine Erhöhung des Massenstroms durch den jeweiligen Heizkörper stattfindet. Durch die Verschiebung zueinander und Zurückkommunizierung der geänderten Zeitprofile wird somit sicher gestellt, dass mehrere Räume somit zeitlich nacheinander, insbesondere innerhalb eines vorgegebenen Zeitintervalls ihre jeweilige Sollwerttemperaturerhöhung erfahren.

So wird hierdurch sicher gestellt, dass eine Änderung eines Temperatur-Zeit-Profils in Abhängigkeit von wenigstens einem anderen Temperatur-Zeit-Profil derart erfolgt, dass zeitliche Koinzidenzen von Temperatursollwertänderungen, insbesondere Erhöhungen vermieden werden durch Änderung der Zeiten in einem Temperatur-Zeit-Profil, in denen eine Änderung, insbesondere Erhöhung, erfolgt.

Es kann weiterhin vorgesehen sein, dass eine Vorlauftemperaturregelung der gesamten Heizungsanlage durchgeführt wird, bei welcher die aktuellen Heizleistungen aller Heizkörper erfasst und an eine Zentralstation oder wenigstens einem Raumtemperaturregler übermittelt werden, die/der aus allen erhaltenen aktuellen Heizleistungen für jeden Heizkörper eine mögliche niedrigere Vorlauftemperatur und einen höheren Massenstrom des Heizmediums berechnet, mit welchem dieselbe Heizleistung an diesem Heizkörper erzielt wird, wobei ein neuer Vorlauftemperatursollwert aus allen so berechneten Vorlauftemperaturen ermittelt und eingestellt wird.

Diesem Verfahrensschritt, der ebenso in Verbindung mit dem erfindungsgemäßen Raumregelverfahren durchgeführt werden kann, liegt die Überlegung zugrunde, dass ein Wärmebedarf, der aktuell in einem Raum mit einem bestimmten Heizkörper gegeben ist, üblicherweise auch bedient werden kann bei einer geringeren als der aktuell vorliegenden Vorlauftemperatur, wenn dafür der aktuell vorliegende Massenstrom erhöht wird.

Es kann demnach also vorgesehen sein, die jeweils bei jedem Heizkörper benötigte Vorlauftemperatur zur Bedarfsbefriedigung zu berechnen und aus den Informationen über diese nötigen Vorlauftemperaturen bei jedem einzelnen Heizkörper eine neue Vorlauftemperatur für die zentrale Heizungsanlage zu berechnen. Beispielsweise kann von allen berechneten Heizkörpervorlauftemperaturen die höchste als neuer Vorlauftemperatursollwert für die zentrale Heizungsanlage eingestellt werden. Ebenso kann der neue Vorlauftemperatursollwert aus der höchsten aller berechneten Heizkörpervorlauftemperaturen zuzüglich einem Zuschlag eingestellt werden. Ein solcher Zuschlag kann beispielsweise regelbasiert aus aktuellen Klimabedingungen, insbesondere Außentemperatur, Sonne, Wind, Zeitinformationen und/oder Gebäudedaten, insbesondere Bauschwere, Zeitkonstante etc. ermittelt werden.

Um hier in dem erfindungsgemäßen Verfahren die aktuellen Heizleistungen bei den aktuellen Heizkörpern bzw. Räumen zur Verfügung zu stellen, kann es vorgesehen sein, die Erfassung dieser aktuellen Heizleistungen durch an den Heizkörpern angeordnete elektronische Heizkostenverteiler vorzunehmen, die in einem Funknetz miteinander und/oder mit der Zentralstation kommunizieren.

Solche Heizkostenverteiler können demnach zum einen lediglich für den Teilaspekt der Vorlauftemperaturregelung im Rahmen des erfindungsgemäßen Verfahrens eingesetzt werden oder aber auch schon für den Grundgedanken der erfindungsgemäßen Einzelraumtemperaturregelung, beispielsweise wenn dann die Heizkostenverteiler dazu dienen, Temperatur-Zeit-Profile zu speichern, Raumtemperaturen zu erfassen oder gegebenenfalls durch Kommunikation mit Stellelementen den Massenstrom durch einen Heizkörper zu beeinflussen. Ausführungsbeispiele der Erfindung sind in den nachfolgenden Figuren dargestellt. Es zeigen:
- Figur 1: die Änderung der Temperatursollwerte gegenüber einem gespeicherten Temperatur-Zeit-Profil mit konstanter Geschwindigkeit der Sollwerttemperaturverringerung
- Figur 2: die Änderung der Temperatursollwerte gegenüber einem gespeicherten Temperaturwert variabler Geschwindigkeit der Verringerung
- Figur 3:: die zeitliche Verschiebung der Änderungen der Temperatursollwerte.

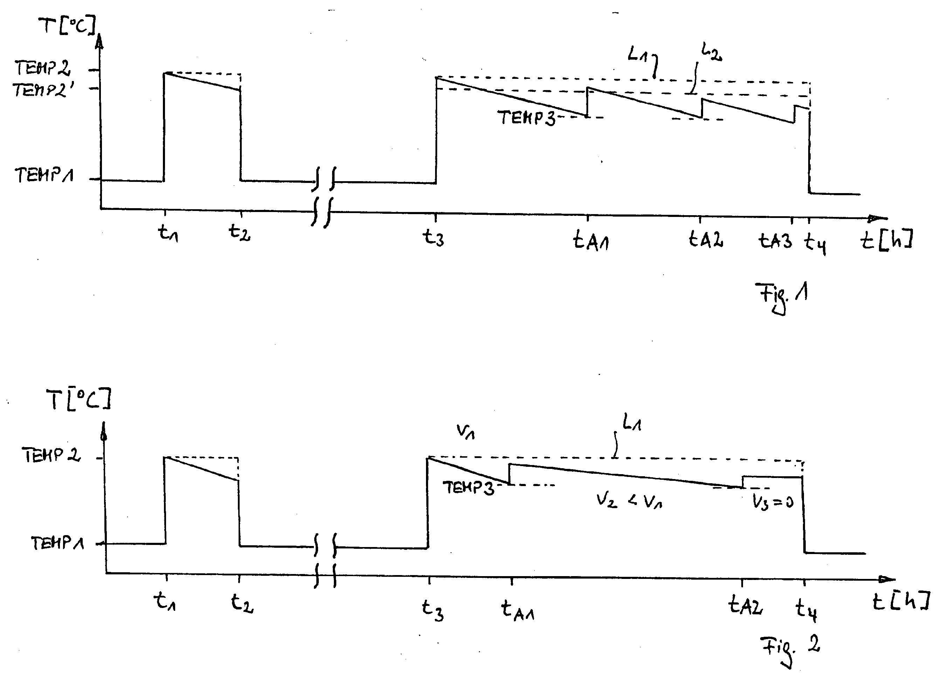

Die Figur 1 zeigt ein Beispiel, wie das erfindungsgemäße Verfahren durchgeführt werden kann. Erkennbar ist in der Figur 1 ein Temperatur-Zeit-Profil, hier einfachster Art, zwischen zwei Temperaturen, nämlich einer unteren Mindesttemperatur TEMP 1 und einer oberen, demgegenüber höheren Temperatur TEMP 2.

Beispielsweise kann es vorgesehen sein, dass ein Nutzer während seiner grundsätzlichen Anwesenheitszeiten in einem Gebäude den Wunsch hat, dass die Räume die Temperatur TEMP 2 erreichen, wohingegen während seiner Abwesenheitszeit, beispielsweise wenn er zur Arbeit ist, die Räume bis auf die Temperatur TEMP 1 auskühlen dürfen. So wünscht in diesem konkreten Beispiel der Figur 1 ein Nutzer beispielsweise eine hohe Raumtemperatur zwischen den Zeiten T1 und T2 sowie zwischen den Zeiten T3 und T4. Beispielsweise können die Zeiten T1 und T2 morgens liegen zwischen dem Aufstehen und dem Verlassen der Wohnung auf dem Weg zur Arbeit und die Zeiten T3 und T4 zwischen der Rückkehr von der Arbeit nach Hause sowie dem Zubettgehen.

Verfahrensgemäß ist es hier demnach vorgesehen, dass der Temperatursollwert eines Raumtemperaturreglers zur Zeit T1 von dem bisherigen Wert TEMP1 auf die Temperatur TEMP 2 angehoben wird, demnach also eine Heizphase beginnt und beispielsweise der Massenstrom durch den entsprechenden Heizkörper, z.B. durch Öffnen eines Ventils erhöht wird.

Durch das erfindungsgemäße Verfahren wird sodann bewirkt, dass der gespeicherte Temperatursollwert TEMP 2, wie er durch die gestrichelte Linien der Figur 1 hier zwischen t1 und t2 als konstant gegeben ist, kontinuierlich verringert wird, in diesem Beispiel mit einer immer konstanten Geschwindigkeit, wofür beispielsweise ein Differenzwert von dem gespeicherten Sollwert TEMP 2 subtrahiert wird und sich der Differenzwert kontinuierlich mit der konstanten Geschwindigkeit erhöht.

Gegenüber dem gespeicherten Temperatur-Zeit-Profil ergibt sich demnach in der tatsächlichen Raumtemperaturregelung ein geändertes Sollwertprofil, welches der durchgezogenen und mit zunehmenden Zeiten abfallenden Geraden entspricht. Tatsächlich fällt demnach zwischen den Zeiten t1 und t2 der Temperatursollwert gegenüber dem vorgegebenen gespeicherten Wert TEMP 2 ab. Hier ist bei der Figur 1 vorgesehen, dass zwischen den Zeiten t1 und t2 ein Nutzer keinen Eingriff in die Heizungsanlage bzw. Raumtemperaturregelung nimmt, demnach also keine Wärmeanforderung bei der Durchführung des erfindungsgemäßen Verfahrens registriert wird.

Anders sieht dies aus zwischen den Zeiten t3 und t4, wenn der Benutzer beispielsweise von der Arbeit nach Hause kommt und abends zu Hause ist. In gleicher Weise wird nach der Sollwerterhöhung zum Zeitpunkt t3, welches einer Heizphase entspricht, durch das erfindungsgemäße Verfahren mit einer konstanten Geschwindigkeit die gespeicherte Sollwertvorgabe verringert und der so reduzierte Sollwert zur Durchführung der Raumtemperaturregelung verwendet.

Hier ist in den weiteren, nach t3 folgenden Zeiten zu erkennen, dass zum Zeitpunkt tA1 der Nutzer eine erste Wärmeanforderung bekannt gibt, beispielsweise dadurch, dass er ein entsprechendes Bedienelement bedient, das durch das erfindungsgemäße Verfahren insbesondere kontinuierlich abgefragt wird durch technische Erfassung einer Messgröße, wie im allgemeinen Teil beschrieben.

Der Raumtemperaturregler erkennt demnach, dass der Nutzer eine Wärmeanforderung gibt, der Nutzer also mit dem aktuellen Komfort im Raum unzufrieden ist und mehr Wärme wünscht. Aus diesem Grund wird der durch das erfindungsgemäße Verfahren bis dahin verringerte Temperatursollwert, wie hier zum Zeitpunkt TA1 erkennbar, erhöht, jedoch bei dieser Ausführung spezieller Art nicht bis zum ursprünglich gespeicherten Temperatursollwert TEMP 2, sondern bis zu einem darunter liegenden Wert.

Von diesem Wert ausgehend, erfolgt sodann wiederum die allmähliche Absenkung des Temperatursollwertes gemäß dem erfindungsgemäßen Verfahren, bis dass zum Zeitpunkt tA2 sich der Nutzer wieder unbehaglich fühlt und mit der Wärme im Raum unzufrieden ist, demnach also eine erneute Wärmeanforderung gibt, bei welcher wiederum der aktuelle Temperatursollwert, der durch das Verfahren bis dahin erreicht wurde, angehoben wird und sodann im weiteren zeitlichen Verlauf wiederum sinkt bis zur nächsten Anhebung zum Zeitpunkt tA3. Zum Zeitpunkt t4 ist im Temperatur-Zeit-Profil gespeichert, dass der Temperatursollwert fallen soll auf den Wert TEMP 1, beispielsweise zu Nachtzeiten, wenn keine Wärme in den Räumen benötigt wird.

Die jeweiligen Temperatursollwerte, die nach einer Anforderung eingestellt werden, können erfindungsgemäß zwischen dem aktuell im Rahmen des erfindungsgemäßen Verfahrens erreichten Temperatursollwert und dem ursprünglichen, im Profil gespeicherten Temperaturwert liegen. Es kann grundsätzlich jeder Wert dazwischen eingenommen werden, wobei es verfahrensgemäß festgelegt werden kann, was für ein Zwischenwert gewählt wird.

Es kann hier auch für die zukünftige nächste periodische Durchführung des erfindungsgemäßen Verfahrens vorgesehen sein, dass ausgehend von dem durch die gestrichelte Linie L1 gegebenen oberen Temperaturwert TEMP2 für die Zukunft abgewichen wird, da bei der Durchführung des erfindungsgemäßen Verfahrens festgestellt wurde, dass ein Nutzer hier im vorliegenden Fall eine Behaglichkeitsgrenze bei der Temperatur TEMP3 hat, da zu dieser Temperatur der Nutzer jeweils eine Wärmeanforderung gegeben hat. Es kann demnach vorgesehen sein, dass für die nächste Durchführung des Verfahrens ein Temperatur-Zeit-Profil gespeichert wird, bei welchem zwischen den Zeiten t3 und t4 eine verringerte obere Sollwerttemperatur TEMP2' gemäß der gestrichelten Linie L2 vorgegeben wird.

Diese neue obere Temperatur kann so eingestellt werden, dass sie unterhalb der ursprünglich gespeicherten hohen Sollwerttemperatur und oberhalb derjenigen Sollwerttemperatur liegt, bei welcher der Nutzer eine Wärmeanforderung gegeben hat.

Durch mehrfache Iteration dieses Schrittes bei der periodischen Ausführung des erfindungsgemäßen Verfahrens kann somit eine Optimierung des Temperatur-Zeit-Profils auf schleichende Art und Weise stattfinden und Energie eingespart werden. Es kann dabei auch vorgesehen sein, dass mit kontinuierlicher Absenkung der oberen Temperatursollwerte in einem gespeicherten Temperatur-Heiz-Profil gleichzeitig auch die Geschwindigkeit der Verringerung der Temperatursollwerte geändert, insbesondere verringert wird, um zu vermeiden, dass aufgrund der geringeren Differenzen zwischen oberem Temperatursollwert und der unteren Behaglichkeitsgrenze TEMP3 zu häufig ein Nutzer Wärmeanforderungen gibt.

Die Figur 2 zeigt eine alternative Ausführung des Verfahrens, die grundsätzlich auch mit derjenigen der Figur 1 kombiniert werden kann. Zwischen den Zeiten t1 und t2 erfolgt hier im Wesentlichen der gleiche Verfahrensgang wie zur Figur 1 beschrieben.

Zur Zeit t3 ergibt sich hier eine Wärmeanforderung, gemäß der eine Sollwerttemperaturvorgabe mit der Temperatur TEMP2 erfolgt, wobei sodann gegenüber der gestrichelten Linie L1 mit dem erfindungsgemäßen Verfahren eine Verringerung der Sollwerttemperatur zur aktuellen Verwendung bei der Raumtemperaturregelung erfolgt. Hier erfolgt die Verringerung der Temperatur mit einer Geschwindigkeit V1.

Bei Erreichen einer Behaglichkeitsgrenztemperatur TEMP3 gibt hier zum Zeitpunkt tA1 der Nutzer wiederum eine Wärmeanforderung, da er sich unbehaglich fühlt, wodurch verfahrensgemäß der Temperatursollwert angehoben wird, jedoch auch hier bei diesem Beispiel lediglich auf einen Wert unterhalb des Wertes, wie er im Profil gespeichert ist. Ausgehend von diesem Wert erfolgt sodann wiederum verfahrensgemäß die Verringerung des Temperatursollwertes, jedoch bei dieser Variante nunmehr mit einer Geschwindigkeit V2 kleiner V1, da es aufgrund der nunmehr erzielten geringeren Differenz der Startsollwerttemperatur bis zur Temperatur TEMP3, die der Nutzer als unbehaglich empfindet, ansonsten diese Unbehaglichkeitsgrenze zu schnell erreicht würde.

Erkennbar ist hier, dass zum Zeitpunkt tA2 wiederum die Unbehaglichkeitsgrenze TEMP3 erreicht wird und der Nutzer erneut eine Wärmeanforderung gibt durch Betätigen eines entsprechenden Betätigungselementes zur Bereitstellung einer die Wärmeanforderung repräsentierenden Messgröße. Wiederum wird der Temperatursollwert erhöht, jedoch hier auf einen Wert zwischen der Unbehaglichkeitsgrenze TEMP3 und dem Wert des Temperatursollwertes, wie er durch die vorherige Temperaturerhöhung bei einer Wärmeanforderung gegeben war.

Ausgehend von diesem jetzt eingestellten Temperatursollwert erfolgt eine weitere Reduzierung der weiteren Temperaturverringerungsgeschwindigkeit, in diesem Beispiel mit einer Geschwindigkeit V3 = 0, was bedeutet, dass bei dieser Ausführung der sodann eingestellte Temperatursollwert konstant bleibt. Das System hat so festgestellt, dass es sich knapp oberhalb der Behaglichkeitsgrenze TEMP3 befindet und somit den Komfortwunsch des Nutzers dauerhaft erfüllen kann.

Auch hier kann es bei der Figur 2 vorgesehen sein, für die nächste periodische Wiederholung des Verfahrens den oberen Temperaturwert TEMP 2 im gespeicherten Profil anzupassen, insbesondere gegenüber dem vorherigen gespeicherten Wert zu reduzieren, was hier gegebenenfalls nur für das Zeitintervall t3 bis t4 erfolgen kann.

In gleicher Weise kann es vorgesehen sein, neben einer Reduzierung des oberen Temperaturwertes TEMP2 gleichzeitig auch die Geschwindigkeit zu ändern, insbesondere zu reduzieren, mit welcher bei der Durchführung des erfindungsgemäßen Verfahrens eine weitere Reduktion des Temperatursollwertes erfolgt. So wird auch bei der Ausführung gemäß der Figur 2 eine iterative Optimierung mit jeder periodischen Durchführung des Verfahrens durchgeführt.

Jeder Teilschritt bei der Durchführung des Verfahrens, wie es zu den Figuren 1 und 2 konkret beschrieben wurde, kann auch für sich losgelöst von den übrigen Schritten der Figuren in seiner Allgemeinheit bei anderen nicht konkret beschriebenen Ausführungen durchgeführt werden.

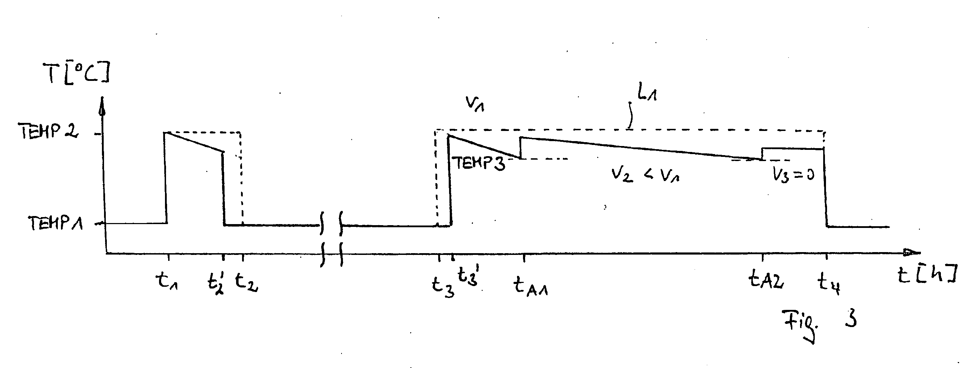

Die Figur 3 zeigt eine Weiterbildung, aufbauend auf dem Verfahren, wie es zur Figur 2 beschrieben wurde. Im ersten Teil des gezeigten Profils zwischen den Zeiten t1 und t2 hat das erfindungsgemäße Verfahren automatisch den ursprünglich gespeicherten Zeitpunkt der Absenkung von t2 auf t2' vorverschoben, da insbesondere durch den Raumtemperaturregler keinerlei Wärmeanforderung durch eine Person registriert wurde zwischen den Zeiten t1 und t2 festgestellt wurde. Es wurde dann davon ausgegangen, dass eine Person ggfs zum Zeitpunkt t2 schon abwesen ist, so dass sich ein Heizen bis zu dieser Zeit erübrigt und die Absenkzeit somit vorgezogen werden kann. Mit dieser vorgezogenen und im Profil gespeicherten Zeit t2' kann eine neue Periode des erfindungsgemäßen Verfahrens begonnen werden. Es kann dann vorgesehen sein, dass die Zeit t2'wieder zu größeren Zeiten verschoben wird, wenn der Nutzer eine Wärmeanforderung in einer festgelegten zeitlichen Umgebung um t2'gibt oder auch dass die Zeit t2'weiter zu frühere Zeiten verschoben wird, wenn weiterhin eine Wärmeanforderung ausbleibt. So optimiert das Verfahren nicht nur die Solltemperaturen sondern auch die Zeiten zu denen diese gelten sollen.

Ähnliches gilt zwischen den Zeiten t3 und t4. Bei der Durchführung des Verfahrens in der vorherigen Periode, wie z.B. zu Figur 2 beschrieben, wurde beispielsweise festgestellt, dass ein Nutzer nach dem Aufheizbeginn zur Zeit t3 erst zum Zeitpunkt tA1 eine Wärmeanforderung gegeben hat. Daraus kann das Verfahren lernen, dass die vor dem Zeitpunkt tA1 vorherrschenden Temperaturen ausreichend waren und/oder der Nutzer vor tA1 noch nicht anwesend war. Es kann dann alternativ oder auch kumulativ zu einer Solltemperaturänderung auch eine automatische Verschiebung der Zeit t3 des ursprünglichen Aufheizzeitpunktes zu einer neuen Zeit t3' erfolgen, so dass das Verfahren in der nächsten Durchführungsperiode ausgehend von der späteren Zeit t3' startet, die sich je nach Reaktion des Nutzers mit Wärmeanforderungen dann bei späteren Perioden weiterhin nach vorne oder hinten zeitlich verschieben kann.

## Patentansprüche

1. Verfahren zur Regelung der Raumtemperatur in wenigstens einem Raum, bei welchem mittels eines Raumtemperaturreglers in Abhängigkeit von einer Abweichung der tatsächlichen Raumtemperatur von einem Temperatur-Sollwert der Massenstrom eines Heizmediums durch einen Heizkörper des betreffenden Raumes geregelt wird, wobei der Temperatur-Sollwert in Abhängigkeit von wenigstens einem gespeicherten Temperatur-Zeit-Profil vorgegeben wird und der Raumtemperaturregler selbsttätig den durch das Temperatur-Zeit-Profil vorgegebenen Temperatur-Sollwert mit der Zeit fortschreitend verringert, wenn keine durch eine Messgröße repräsentierte Wärmeanforderung gegeben ist, **dadurch gekennzeichnet, dass** der Raumtemperaturregler eine der Verringerung gegenläufige Erhöhung des Temperatur-Sollwerts vornimmt in Abhängigkeit von einer eine Wärmeanforderung repräsentierenden Messgröße, die erfasst wird mittels eines von einem Nutzer betätigbaren Stellelements, wobei das Temperatur-Zeitprofil, insbesondere durch den Raumtemperaturregler, selbsttätig geändert wird in Abhängigkeit von wenigstens einer gemessenen Raum-Isttemperatur zum Zeitpunkt der wenigstens einen Wärmeanforderung und gespeichert wird.

2. Verfahren nach Anspruch 1, **dadurch gekennzeichnet, dass**, die Größe einer Wärmeanforderung repräsentiert wird durch die Dauer, die Weite, die Häufigkeit oder Richtung der Betätigung des Stellelements oder durch einen mit dem Stellelement eingestellten, insbesondere elektronisch erfassbaren Wert.

3. Verfahren nach einem der vorherigen Ansprüche, **dadurch gekennzeichnet, dass** eine über die Zeit erfolgende SollwertAnpassung nur bis zu einer minimalen Grenztemperatur erfolgt und/oder bei einem Temperatur-Zeitprofil mit niedrigen und hohen Sollwert-Temperaturen nur die gespeicherten hohen Sollwert-Temperaturen verringert werden.

4. Verfahren nach einem der vorherigen Ansprüche, **dadurch gekennzeichnet, dass** eine über die Zeit hinweg erfolgende SollwertAnpassung periodisch, insbesondere täglich, erfolgt ausgehend von dem ursprünglichen gespeicherten Temperatur-Zeit-Profil.

5. Verfahren nach einem der vorherigen Ansprüche, **dadurch gekennzeichnet, dass** zur Berechnung eines aktuell zu einer gegebenen Tageszeit zu verwendenden Temperatur-Sollwertes mit Hilfe des Temperatur-Zeitprofils ein zur gegebenen Zeit gültiger Temperatursollwert bestimmt oder aus dem Temperatur-Zeit-Profil der zu dieser Zeit gespeicherte Temperatursollwert ausgelesen und von diesem Wert ein gespeicherter Differenzwert subtrahiert wird, wobei sich der Differenzwert mit einer gespeicherten Geschwindigkeit erhöht und/oder von der Meßgröße abhängig ist.

6. Verfahren nach Anspruch 5, **dadurch gekennzeichnet, dass** bei einer Temperatur-Sollwert-Änderung in dem gespeicherten Temperatur-Zeit-Profil der gespeicherte Differenzwert geändert wird, insbesondere zu Null zurückgesetzt wird.

7. Verfahren nach einem der vorherigen Ansprüche, **dadurch gekennzeichnet, dass** in Abhängigkeit von der Messgröße
a. eine Geschwindigkeit der insbesondere zukünftigen Verringerung des Temperatur-Sollwerts oder Erhöhung des Differenzwertes geändert, insbesondere verringert wird und/oder
b. ein gespeicherter Differenzwert geändert, insbesondere verringert wird und/oder
c. die Verringerung des Temperatur-Sollwertes nach einer vorherigen Erhöhung für eine vorgegebene/vorgebbare Zeit ausgesetzt wird.

8. Verfahren nach einem der vorherigen Ansprüche, **dadurch gekennzeichnet, dass** eine gespeicherte Geschwindigkeit entweder der Soll-Temperatur-Verringerung oder einer Differenzwerterhöhung, insbesondere durch den Raumtemperaturregler selbsttätig geändert wird in Abhängigkeit von der in einem Zeitintervall, insbesondere einem Tag vorgenommenen Temperatur-Sollwert-Änderungen und/oder von der die Wärmeanforderung repräsentierenden Messgröße oder deren zeitlichen Verlauf und gespeichert wird.

9. Verfahren nach einem der vorherigen Ansprüche, **dadurch gekennzeichnet, dass** mehrere Raumtemperaturregler, insbesondere alle Raumtemperaturregler der Räume eines Gebäudes oder denen zugeordnete Kommunikationsgeräte in einem Netzwerk, insbesondere einem Funknetzwerk vernetzt sind und ihre Temperatur-Zeitprofile und/oder Ist-Temperatur und/oder verringerte Soll-Temperatur untereinander und/oder an eine in dem Netzwerk angeordnete Zentralstation übermitteln.

10. Verfahren nach Anspruch 9, **dadurch gekennzeichnet, dass** die Zentralstation oder ein Raumtemperaturregler die erhaltenen Temperatur-Zeitprofile miteinander vergleicht, die erhaltenen Temperatur-Zeitprofile in Abhängigkeit voneinander ändert und an die jeweiligen Raumtemperaturregler zurückkommuniziert.

11. Verfahren nach Anspruch 10, **dadurch gekennzeichnet, dass** eine Änderung eines Temperatur-Zeitprofiles in Abhängigkeit von wenigstens einem anderen Temperatur-Zeitprofil derart erfolgt, dass zeitliche Koinzidenzen von Temperatur-Sollwert-Änderungen, insbesondere Temperatur-Sollwert-Erhöhungen vermieden werden durch Änderung der Zeiten in einem Temperatur-Zeitprofiles zu denen eine Änderung, insbesondere Erhöhung des Temperatur-Sollwertes erfolgt.

12. Verfahren nach einem der vorherigen Ansprüche, **dadurch gekennzeichnet, dass** eine Vorlauftemperaturregelung der gesamten Heizungsanlage durchgeführt wird, bei der die aktuellen Heizleistungen aller Heizkörper erfasst und an eine Zentralstation oder wenigstens einen Raumtemperaturregler übermittelt werden, die / der aus allen erhaltenen aktuellen Heizleistungen für jeden Heizkörper eine mögliche niedrigere Vorlauftemperatur und einen höheren Massenstrom des Heizmediums berechnet, mit welchen dieselbe Heizleistung an diesem Heizkörpers erzielt wird, wobei der neue Vorlauftemperatur-Sollwert aus allen so berechneten Vorlauftemperaturen ermittelt und eingestellt wird.

13. Verfahren nach Anspruch 12, **dadurch gekennzeichnet, dass** von allen berechneten Heizkörper-Vorlauftemperaturen die höchste als neuer Vorlauftemperatur-Sollwert eingestellt wird.

14. Verfahren nach Anspruch 12, **dadurch gekennzeichnet, dass** der neue Vorlauftemperatur-Sollwert aus der höchsten aller berechneten Heizkörper-Vorlauftemperaturen zuzüglich einem Zuschlag ermittelt und eingestellt wird.

15. Verfahren nach Anspruch 14, **dadurch gekennzeichnet, dass** der Zuschlag regelbasiert aus aktuellen Klimabedingungen, insbesondere Außentemperatur, Sonne, Wind, Zeitinformationen und/oder Gebäudedaten, insbesondere Bauschwere, Zeitkonstante ermittelt wird.

16. Verfahren nach einem der vorherigen Ansprüchen 12 bis 15 , **dadurch gekennzeichnet, dass** die Erfassung der aktuellen Heizleistungen erfolgt durch an den Heizkörpern angeordnete elektronische Heizkostenverteiler, die in einem Funknetz miteinander und/oder der Zentralstation kommunizieren.

## Claims

1. Method for regulating the room temperature in at least one room, in the case of which as a function of a deviation of the actual room temperature from a temperature desired value the mass flow of a heating medium through a heating body of the relevant room is regulated by means of a room temperature regulator, the temperature desired value being prescribed as a function of at least one stored temperature-time profile, and the room temperature regulator automatically progressively reducing with time the temperature desired value prescribed by the temperature-time profile when no heating request represented by a measured variable has been made, **characterized in that** the room temperature regulator undertakes an increase in the temperature desired value in opposition to the reduction as a function of a measured variable which represents a heating request and is detected by means of an actuator which can be operated by a user, the temperature-time profile being changed automatically, in particular by the room temperature regulator, as a function of at least one measured actual room temperature at the time of the at least one heating request, and stored.

2. Method according to Claim 1, **characterized in that** the magnitude of a heating request is represented by the duration, the extent, the frequency or direction of the operation of the actuator, or by a value set by the actuator, in particular an electronically detectable one.

3. Method according to one of the preceding claims, **characterized in that** a desired value adjustment performed over time is performed only up to a minimum limiting temperature, and/or only the stored high desired value temperatures are reduced given a temperature-time profile with low and high desired value temperatures.

4. Method according to one of the preceding claims, **characterized in that** a desired value adjustment performed over time is performed periodically, in particular daily, starting from the original stored temperature-time profile.

5. Method according to one of the preceding claims, **characterized in that** in order to calculate a temperature desired value currently to be used at a given time of day, with the aid of the temperature-time profile a temperature desired value valid at the given time is determined, or is read out from the temperature-time profile of the temperature desired value stored at this time, and a stored difference value is subtracted from this value, the difference value being increased at a stored rate, and/or being a function of the measured variable.

6. Method according to Claim 5, **characterized in that** the stored difference value is changed, in particular reset to zero, given a temperature desired value change in the stored temperature-time profile.

7. Method according to one of the preceding claims, **characterized in that** as a function of the measured variable.
a. a rate of the, in particular future, reduction in the temperature desired value or an increase in the difference value is changed, in particular reduced, and/or
b. a stored difference value is changed, in particular reduced, and/or
c. the reduction in the temperature desired value is suspended for a prescribed/prescribable time after a prior increase.

8. Method according to one of the preceding claims, **characterized in that** a stored rate either of the desired temperature reduction or of a difference value increase is automatically changed, in particular by the room temperature regulator, as a function of the temperature desired value changes undertaken in a time interval, in particular a day, and/or as a function of the measured variable representing the heating request or the time profile thereof, and stored.

9. Method according to one of the preceding claims, **characterized in that** a plurality of room temperature regulators, in particular all room temperature regulators of the rooms of a building, or communication devices assigned thereto, are interconnected in a network, in particular a radio network, and transmit their temperature-time profiles and/or actual temperature and/or reduced desired temperature to one another and/or to a central station arranged in the network.

10. Method according to Claim 9, **characterized in that** the central station or a room temperature regulator compares the obtained temperature-time profiles with one another, changes the obtained temperature-time profiles as a function of one another and communicates back to the respective room temperature regulators.

11. Method according to Claim 10, **characterized in that** a change in a temperature-time profile is performed as a function of at least one other temperature-time profile in such a way as to avoid temporal coincidences of temperature desired value changes, in particular temperature desired value increases, by changing the times in a temperature-time profile at which a change, in particular an increase in the temperature desired value, takes place.

12. Method according to one of the preceding claims, **characterized in that** there is carried out a feed temperature regulation of the entire heating plant in the case of which the current heating powers of all heating bodies are detected and transmitted to a central station or at least one room temperature regulator which calculate(s) for each heating body from all obtained current heating powers a possible lower feed temperature and a higher mass flow of the heating medium with which temperature and flow the same heating power is reached at said heating body, the new feed temperature desired value being determined from all feed temperatures thus calculated and set.

13. Method according to Claim 12, **characterized in that** the highest of all the calculated heating body feed temperatures is set as new feed temperature desired value.

14. Method according to Claim 12, **characterized in that** the new feed temperature desired value is determined from the highest of all the calculated heating body feed temperatures plus a supplement, and set.

15. Method according to Claim 14, **characterized in that** the supplement is determined in a rule-based manner from current climatic conditions, in particular outside temperature, sun, wind, time information and/or building data, in particular building weight, time constant.

16. Method according to one of the preceding Claims 12 to 15, **characterized in that** the detection of the current heating powers is performed by electronic heating cost distributors which are arranged on the heating bodies and communicate with one another and/or the central station in a radio network.

## Revendications

1. Procédé de réglage de la température ambiante dans au moins une pièce, dans lequel le débit massique d'un agent chauffant est réglé par un corps de chauffe de la pièce concernée à l'aide d'un système de réglage de température ambiante en fonction d'un écart de la température ambiante effective par rapport à une valeur de température théorique, la valeur de température théorique étant prédéfinie en fonction d'au moins un profil température-heure mémorisé et le système de réglage de température ambiante réduisant automatiquement la valeur de température théorique prédéfinie par le profil température-heure à mesure que l'heure avance, lorsqu'aucune demande de chaleur représentée par un ordre de grandeur de mesure n'est envoyée, **caractérisé en ce que** le système de réglage de température ambiante augmente la valeur de température théorique à l'opposée de la réduction en fonction d'un ordre de grandeur de mesure représentant la demande de chaleur, ledit ordre de grandeur étant détecté à l'aide d'un élément de réglage pouvant être actionné par un utilisateur, le profil température-heure étant notamment modifié automatiquement par le système de réglage de température ambiante en fonction d'au moins une température ambiante réelle mesurée au moment de l'au moins une demande de chaleur et étant mémorisé.

2. Procédé selon la revendication 1, **caractérisé en ce que** l'ordre de grandeur d'une demande de chaleur est représenté par la durée, l'amplitude, la fréquence ou la direction de l'actionnement de l'élément de réglage ou par une valeur réglée au moyen de l'élément de réglage, notamment détectable de façon électronique.

3. Procédé selon l'une quelconque des revendications précédentes, **caractérisé en ce qu'**une adaptation de la valeur théorique sur la durée ne se produit que jusqu'à une température limite minimale et/ou qu'en présence d'un profil température-heure avec des températures de valeur théorique basses et élevées, seules les températures de valeur théorique élevées mémorisées sont réduites.

4. Procédé selon l'une quelconque des revendications précédentes, **caractérisé en ce qu'**une adaptation de la valeur théorique sur la durée se produit périodiquement, notamment quotidiennement, à partir du profil température-heure mémorisé à l'origine.

5. Procédé selon l'une quelconque des revendications précédentes, **caractérisé en ce que** pour calculer une valeur de température théorique à utiliser de façon réelle à une heure donnée du jour, une valeur de température théorique valable à une heure donnée est définie à l'aide du profil température-heure ou que la valeur de température théorique mémorisée à cette heure est lue dans le profil température-heure et qu'une valeur de différence mémorisée est soustraite à cette valeur, la valeur de différence étant accrue d'une vitesse mémorisée et/ou dépendant de l'ordre de grandeur de mesure.

6. Procédé selon la revendication 5, **caractérisé en ce qu'**en cas de modification de la valeur de température théorique dans le profil température-heure mémorisé, la valeur de différence mémorisée est modifiée, notamment réinitialisée à zéro.

7. Procédé selon l'une quelconque des revendications précédentes, **caractérisé en ce qu'**en fonction de l'ordre de grandeur de mesure :
a. une vitesse de la future réduction de la valeur de température théorique ou de la future augmentation de la valeur de différence est modifiée, notamment réduite ; et/ou
b. une valeur de différence mémorisée est modifiée, notamment réduite ; et/ou
c. la réduction de la valeur de température théorique après l'augmentation précédente est suspendue pendant une durée prédéfinie.

8. Procédé selon l'une quelconque des revendications précédentes, **caractérisé en ce qu'**une vitesse mémorisée soit de la baisse de température théorique soit d'une augmentation de valeur de différence est modifiée automatiquement et est mémorisée, notamment par le système de réglage de température ambiante, en fonction des variations de valeur de température théorique se produisant pendant un intervalle de temps, notamment pendant une journée, et/ou en fonction de l'ordre de grandeur de mesure représentant la demande de chaleur ou sa courbe dans le temps.

9. Procédé selon l'une quelconque des revendications précédentes, **caractérisé en ce que** plusieurs systèmes de réglage de température ambiante, notamment tous les systèmes de réglage de température ambiante des pièces d'un bâtiment ou ses appareils de communication associés sont reliés en un réseau, notamment un réseau mobile et que leurs profils température-heure et/ou la température réelle et/ou la température théorique réduite sont transmises de l'un à l'autre et/ou à une station centrale disposée dans le réseau.

10. Procédé selon la revendication 9, **caractérisé en ce que** la station centrale ou un système de réglage de température ambiante comparent entre eux les profils température-heure obtenus, modifient les profils température-heure obtenus en fonction les uns des autres et communiquent ces modifications par voie de retour au système de réglage de température ambiante respectif.

11. Procédé selon la revendication 10, **caractérisé en ce qu'**une modification d'un profil température-heure en fonction d'au moins un autre profil température-heure se produit de telle sorte que les coïncidences dans le temps des variations de valeur de température théorique, notamment les augmentations de valeur de température théorique, sont évitées en modifiant les heures dans un profil température-heure auxquelles une modification se produit, notamment une augmentation de la valeur de température théorique.

12. Procédé selon l'une quelconque des revendications précédentes, **caractérisé en ce qu'**un réglage de la température de départ de l'installation globale de chauffage est réalisé, auquel les puissances de chauffe effectives de tous les corps de chauffe sont détectées et transmises à une station centrale ou, tout au moins, à un système de réglage de température ambiante calculant, à partir de toutes les puissances de chauffe effectives obtenues pour chaque corps de chauffe, une température de départ inférieure possible et un débit massique supérieur de l'agent chauffant permettant d'atteindre la même puissance de chauffe au niveau de ce corps de chauffe, la nouvelle valeur de température théorique de départ étant déterminée et réglée à partir de toutes les températures de départ ainsi calculées.

13. Procédé selon la revendication 12, **caractérisé en ce que** la plus grande nouvelle valeur de température théorique de départ est réglée à partir de toutes les températures de départ de corps de chauffe calculées.

14. Procédé selon la revendication 12, **caractérisé en ce que** la nouvelle valeur de température théorique de départ est réglée, par rapport à un supplément, à partir de toutes les températures de départ de corps de chauffe les plus élevées calculées.

15. Procédé selon la revendication 14, **caractérisé en ce que** le supplément se base sur des règles calculées à partir des conditions climatiques réelles, notamment de la température extérieure, de l'ensoleillement, du vent, des informations sur l'heure et/ou des données relatives au bâtiment, notamment sa solidité, sa constante dans le temps.

16. Procédé selon l'une quelconque des revendications 12 à 15, **caractérisé en ce que** la détection des puissances de chauffe effectives se produit par le biais de répartiteurs électroniques du coût du chauffage disposés au niveau des corps de chauffe communiquant entre eux et/ou avec la station centrale via un réseau mobile.
